# EUROPEAN PATENT APPLICATION

(11) **EP 4 772 340 A1**
(43) Date of publication of application: **08.07.2026**
(21) Application number: 25209635.9
(22) Date of filing: 19.10.2025
(51) Int. Cl.: B32B 7/06, B32B 3/08, B32B 7/05, B32B 7/12, B32B 15/08, B32B 15/20, B32B 27/28, B32B 27/32, B32B 27/34, B32B 27/36

(54) **HALF-MOON TAB TYPE CLOSURE LINER**

(30) Priority: 06.01.2025 TW 114100515
(71) Applicant: Yang, Yen-Wu, 221 New Taipei City (TW)
(72) Inventor: Yang, Yen-Wu, 221 New Taipei City (TW)
(74) Representative: DTS Patent- und Rechtsanwälte PartmbB

(57) **Abstract**

This application provides a half-moon tab type closure liner (50), sequentially including an upper layer (100), a bonding layer (200) and a sealing laminated layer (300) from top to bottom. The upper layer (100) includes a surface film (110). The bonding layer (200) includes a bonding adhesive (210A) or a bonding agent (220A) and a half moon tab layer (230). The sealing laminated layer (300) sequentially includes an electromagnetic induction heating layer (310) and a sealing layer (320) from top to bottom. The bonding layer (200) laminates the upper layer (100) with the sealing laminated layer (300) through the bonding adhesive (210A) or the bonding agent (220A), and an unbonded area is formed between the upper layer (100) and the sealing laminated layer (300). The half moon tab layer (230) is disposed in the unbonded area, and the half moon tab layer (230) is laminated to one of the upper layer (100) and the sealing laminated layer (300) through a laminating adhesive (210B) or a laminating agent (220B).

## Description

### BACKGROUND OF THE INVENTION

### 1. Field of the Invention

The disclosure relates to a closure liner, and in particular to a half-moon tab type closure liner.

### 2. Description of the Related Art

To prevent contents from leakage and from deterioration due to the influence of the external environment, a closure liner is used to seal the opening of a packaging container such as a beverage can, a medicine can or the like. In addition, generally speaking, the closure liner is made of an aluminum foil, a paperboard or the like.

The use of the closure liner to be closely combined with the container opening can prevent the contents from leakage and preserve the contents airtightly.

### BRIEF SUMMARY OF THE INVENTION

However, the conventional closure liner is mainly designed for airtightness without regard to ease of opening. In this case, it is not easy to open the aluminum foil or the paperboard at the container opening by pressing it with fingers, and it is troublesome and dangerous to cut it with a knife or poke it with an awl, resulting in inconvenience for the user.

Therefore, how to solve the above problems in the conventional closure liner and effectively improve the convenience of opening has become an urgent problem to be solved in the technical field.

In order to solve the above problems, the disclosure provides a half-moon tab type closure liner, sequentially including an upper layer, a bonding layer and a sealing laminated layer from top to bottom. The upper layer includes a surface film. The bonding layer includes a bonding adhesive or a bonding agent and a half moon tab layer. The sealing laminated layer sequentially includes an electromagnetic induction heating layer and a sealing layer from top to bottom. The bonding layer laminates the upper layer with the sealing laminated layer through the bonding adhesive or the bonding agent, and an unbonded area is formed between the upper layer and the sealing laminated layer. The half moon tab layer is disposed in the unbonded area, and the half moon tab layer is laminated to one of the upper layer and the sealing laminated layer through a laminating adhesive or a laminating agent.

In some embodiments, the upper layer is laminated with the sealing laminated layer through the bonding adhesive, the half moon tab layer is laminated with the upper layer through the laminating adhesive, and a void area is formed between the half moon tab layer and the sealing laminated layer. The half moon tab layer includes a one-piece half moon tab film. The one-piece half moon tab film is made of at least one selected from the group consisting of paper, polyethylene terephthalate (PET), polypropylene (PP), polyamide (PA), polyethylene naphthalate (PEN) and polyimide (PI).

In some embodiments, the upper layer is laminated with the sealing laminated layer through the bonding adhesive, the half moon tab layer is laminated with the sealing laminated layer through the laminating adhesive, and a void area is formed between the upper layer and the half moon tab layer. The half moon tab layer includes a one-piece half moon tab film. The one-piece half moon tab film is made of at least one selected from the group consisting of paper, PET, PP, PA, PEN and PI.

In some embodiments, the upper layer is laminated with the sealing laminated layer through the bonding agent, the half moon tab layer is laminated with the upper layer through the laminating agent, and the half moon tab layer is laminated with the sealing laminated layer through a binder. The half moon tab layer includes an opposite-fold half moon tab film. The opposite-fold half moon tab film includes an up-fold half moon tab film and a down-fold half moon tab film, the up-fold half moon tab film is laminated with the upper layer, the down-fold half moon tab film is laminated with the sealing laminated layer, and a void area is formed between the up-fold half moon tab film and the down-fold half moon tab film. The up-fold half moon tab film and the down-fold half moon tab film are respectively made of at least one selected from the group consisting of PA, PP, PET, PEN and PI. A sectional width of the up-fold half moon tab film is less than or equal to a sectional width of the down-fold half moon tab film.

In some embodiments, the upper layer is laminated with the sealing laminated layer through the bonding adhesive, the half moon tab layer is laminated with the upper layer through the laminating adhesive, and a void area is formed between the half moon tab layer and the sealing laminated layer. The half moon tab layer includes a spliced half moon tab film. The spliced half moon tab film includes a first half moon tab film and a second half moon tab film, and a gap area is formed between the first half moon tab film and the second half moon tab film. The first half moon tab film is made of at least one selected from the group consisting of PP, PET, PA, PEN and PI, and the second half moon tab film is made of at least one selected from the group consisting of paper, PP, PET, PA, PEN and PI.

In some embodiments, the upper layer is laminated with the sealing laminated layer through the bonding agent, the half moon tab layer is laminated with the upper layer through the laminating agent, and the half moon tab layer is laminated with the sealing laminated layer through a binder. The half moon tab layer includes an opposite-fold spliced half moon tab film. The opposite-fold spliced half moon tab film includes an up-fold half moon tab film and a down-fold half moon tab film, the up-fold half moon tab film is laminated with the upper layer, the down-fold half moon tab film is laminated with the sealing laminated layer, and a void area is formed between the up-fold half moon tab film and the down-fold half moon tab film. The up-fold half moon tab film includes a first half moon tab film and a second half moon tab film, and a gap area is formed between the first half moon tab film and the second half moon tab film. The first half moon tab film of the up-fold half moon tab film and the down-fold half moon tab film are respectively made of at least one selected from the group consisting of PA, PP, PET, PEN and PI. The second half moon tab film of the up-fold half moon tab film is made of at least one selected from the group consisting of paper, PA, PP, PET, PEN and PI.

In some embodiments, a sectional width of the half moon tab layer is greater than or equal to one-sixth of a sectional width of the half-moon tab type closure liner, and the sectional width of the half moon tab layer is less than or equal to five-sixths of the sectional width of the half-moon tab type closure liner.

In some embodiments, the sealing laminated layer further includes a bonding film. The bonding film is disposed at an uppermost layer of the sealing laminated layer. The bonding film is made of at least one selected from the group consisting of polyethylene (PE), PP, PA, expandaple polyproplene (EPP) and expandaple polyethylene (EPE).

In some embodiments, the sealing laminated layer further includes a laminating film. The laminating film is disposed above the electromagnetic induction heating layer. The laminating film is made of at least one selected from the group consisting of PP, PET, PEN, PE and PA.

In some embodiments, through the bonding adhesive, a peeling strength between the upper layer and the sealing laminated layer is greater than or equal to 17.8 N/15 mm.

In some embodiments, the surface film is made of at least one selected from the group consisting of PEN, PI, PET, PE, PP and PA.

In some embodiments, the sealing layer is a hot melt glue or a combination of a sealing film and a binding agent. The hot melt glue is made of at least one selected from the group consisting of ethylene vinyl acetate copolymer (EVA), polyisobutylene (PIB), ethylene butyl acrylate copolymer (EBA), ethylene acrylic acid copolymer (EAA), ethylene-methyl acrylate copolymer (EMAC), polyacrylate, polyacetate and ethylene methacrylic acid copolymer (EMAA). The sealing film is made of at least one selected from the group consisting of PE, PP, PA, polyvinylidene chloride (PVDC), ethylene vinyl alcohol copolymer (EVOH) and PET, and the binding agent is located between the sealing film and the electromagnetic induction heating layer.

In some embodiments, the bonding adhesive, the laminating adhesive, the bonding agent and the laminating agent are a dry compound adhesive or a hot melt lamination glue, and the hot melt lamination glue is made of at least one selected from the group consisting of PE, PP, EMAA, EAA, ethylene ethyl acrylate copolymer (EEA), EMAC and ethylene methyl methacrylate (EMMA).

In some embodiments, the electromagnetic induction heating layer is an aluminum foil or a wireless information integrated flake.

In some embodiments, the wireless information integrated flake includes: a base film; an information and heating layer, including an information area and an electromagnetic induction heating ring; and a first binding layer, located between the base film and the information and heating layer. The information area is provided with an antenna and a chip connected to each other, and the electromagnetic induction heating ring surrounds the information area in a plane view angle.

In some embodiments, the wireless information integrated flake further includes a protective layer and a second binding layer, the protective layer is located on one side, away from the base film, of the information and heating layer, and the second binding layer is located between the information and heating layer and the protective layer.

In some embodiments, a spacing is formed between the electromagnetic induction heating ring and the information area. In addition, in some embodiments, the spacing is a space between an outermost edge of the information area and an innermost edge of the electromagnetic induction heating ring and is 0.1 mm to 3 mm. In addition, in some preferred embodiments, a spacing is fully filled between the electromagnetic induction heating ring and the information area.

In some embodiments, the information and heating layer further includes at least one physical connection bridge, configured to connect the information area with the electromagnetic induction heating ring.

By using the half-moon tab type closure liner provided by the disclosure, those of ordinary skill in the art to which the application belongs can prevent the contents from leakage and from deterioration due to the influence of the external environment, and the user can easily open the half-moon tab type closure liner at the container opening by directly pinching the half moon tab layer and the surface film without using a foreign tool, thereby further improving the convenience for opening.

An embodiment of the disclosure is completed in view of the above problems in the prior art for the purpose of providing a half-moon tab type closure liner, which can further improve the user's convenience for opening. That is, the half-moon tab type closure liner provided by the disclosure can ensure both the airtightness for preserving the contents and the user's convenience for opening.

### BRIEF DESCRIPTION OF THE DRAWINGS

FIG. 1A is a schematic sectional view for illustrating a half-moon tab type closure liner of a first example of the disclosure.
FIG. 1B is a schematic sectional view for illustrating local changes of the half-moon tab type closure liner shown in FIG. 1A.
FIG. 1C is a schematic sectional view for illustrating local changes of the half-moon tab type closure liner shown in FIG. 1A.
FIG. 1D is a schematic sectional view for illustrating local changes of the half-moon tab type closure liner shown in FIG. 1C.
FIG. 2A is a schematic sectional view for illustrating a half-moon tab type closure liner of a second example of the disclosure.
FIG. 2B is a schematic sectional view for illustrating a half-moon tab type closure liner of a third example of the disclosure.
FIG. 2C is a schematic sectional view for illustrating a half-moon tab type closure liner of a fourth example of the disclosure.
FIG. 3 is a schematic sectional view for illustrating a half-moon tab type closure liner of a fifth example of the disclosure.
FIG. 4 is a schematic sectional view for illustrating a half-moon tab type closure liner of a sixth example of the disclosure.
FIG. 5 is a schematic sectional view for illustrating a half-moon tab type closure liner of a seventh example of the disclosure.
FIG. 6A to FIG. 6D are side views for illustrating a half-moon tab type closure liner of the disclosure.
FIG. 7 is a schematic sectional view of a wireless information integrated flake according to an example of the disclosure.
FIG. 8A is a schematic plane view of an information and heating layer according to an example of the disclosure.
FIG. 8B is a schematic plane view of an information and heating layer according to another example of the disclosure.
FIG. 9A is a schematic plane view of a specific example of an information area according to an example of the disclosure.
FIG. 9B is a schematic plane view of a specific example of an information area according to another example of the disclosure.
FIG. 10 is a schematic sectional view of a wireless information integrated flake according to another example of the disclosure.

### DETAILED DESCRIPTION OF THE INVENTION

The implementations of this application are described below through specific examples. Those skilled in the art can easily understand the other advantages and effects of this application from the content disclosed in this specification. This application may also be implemented or applied by other different specific examples, and various modifications and changes can be made to the details in this specification based on different viewpoints and applications without departing from the spirit of this application.

Unless otherwise stated, the term "A to B" used in the specification and the accompanying claims means "above A and below B". For example, the term "10 wt% to 40 wt%" means "above 10 wt% and below 40 wt%".

Besides, in the content described in the disclosure, it should be noted that the terms such as "first", "second" and "third" are used to distinguish the differences between components, and are not intended to limit the components themselves or to indicate a specific order of the components. It should be noted that in the content described below, the same components or steps may be denoted by the same reference signs.

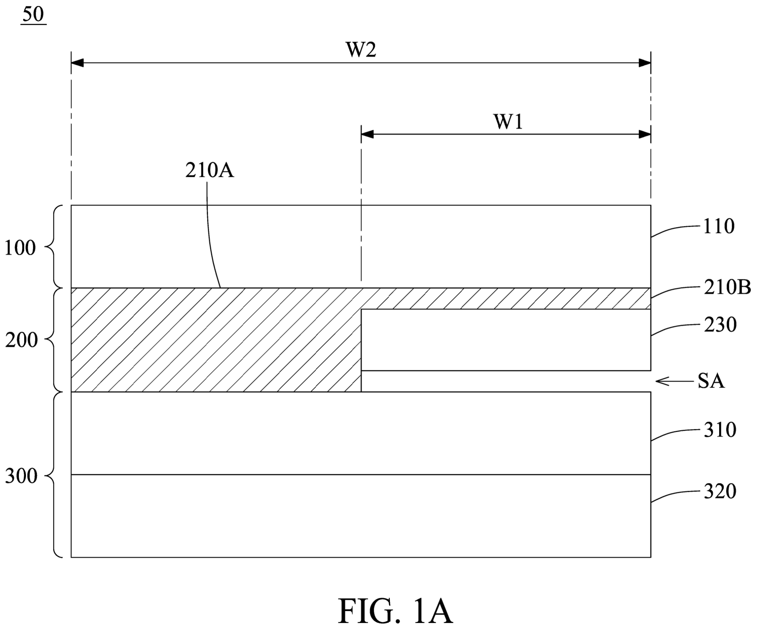

Referring to FIG. 1A, FIG. 1A is a schematic sectional view for illustrating a half-moon tab type closure liner 50 of a first example of the disclosure. As shown in FIG. 1A, the half-moon tab type closure liner 50 sequentially includes an upper layer 100, a bonding layer 200 and a sealing laminated layer 300 from top to bottom. The upper layer 100 includes a surface film 110. The bonding layer 200 includes a bonding adhesive 210A and a half moon tab layer 230. The sealing laminated layer 300 sequentially includes an electromagnetic induction heating layer 310 and a sealing layer 320 from top to bottom. The structures will be respectively described in more detail below.

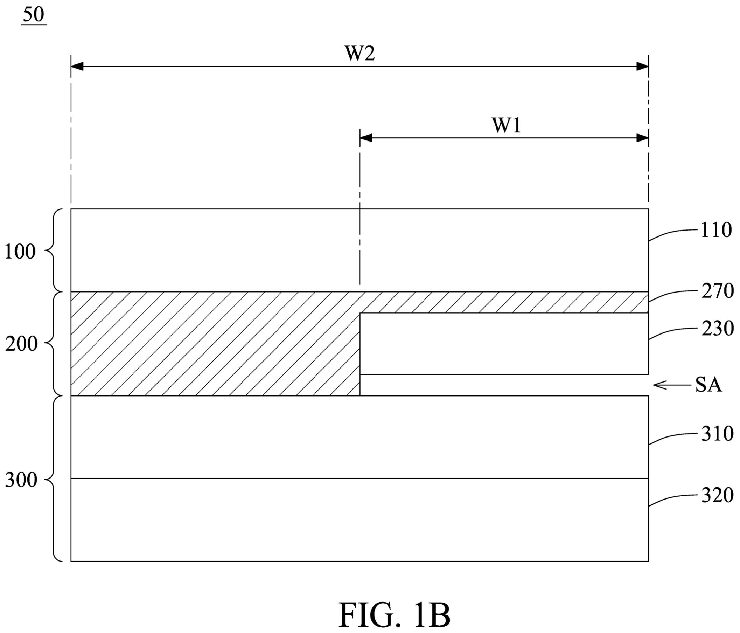

Additionally, referring to FIG. 1B, FIG. 1B is a schematic sectional view for illustrating local changes of the half-moon tab type closure liner 50 shown in FIG. 1A. Compared with FIG. 1A, the bonding adhesive 210A and the laminating adhesive 210B shown in FIG. 1A may also be respectively replaced with a dry compound adhesive or a hot melt lamination glue 270, and the hot melt lamination glue 270 may be made of at least one selected from the group consisting of PE, PP, EMAA, EAA, EEA, EMAC and EMMA. In addition, a thickness of the hot melt lamination glue 270 is preferably 4 µm to 60 µm. In some examples, the hot melt lamination glue 270 may be, for example, an extrusion coating adhesive used in extrusion coating, but is not limited thereto. In some examples, through the hot melt lamination glue 270, a peeling strength between the upper layer 100 and the sealing laminated layer 300 may be greater than or equal to 17.8 N/15 mm, and a peeling strength between the upper layer 100 and the half moon tab layer 230 may be greater than or equal to 17.8 N/15 mm. Accordingly, the hot melt lamination glue 270 can be used to firmly laminate the upper layer 100 with the sealing laminated layer 300 and the upper layer 100 with the half moon tab layer 230.

It should be noted that the bonding adhesive and the laminating adhesive of this application may be the same glue for compounding, thereby reducing the manufacturing complexity and improving the manufacturing convenience. In addition, the bonding adhesive and the laminating adhesive of this application may also be different glues for compounding. Similarly, the bonding agent and the laminating agent of this application may also be the same glue for compounding, thereby reducing the manufacturing complexity and improving the manufacturing convenience. In addition, the bonding agent and the laminating agent of this application may also be different glues for compounding.

### <<Upper layer 100>>

The upper layer 100 is disposed at an uppermost layer of the half-moon tab type closure liner 50. Taking FIG. 1A as an example, the upper layer 100 includes a surface film 110, which serves as an uppermost layer (i.e., a surface layer) of the half-moon tab type closure liner 50. In some examples, an upper surface and/or a lower surface of the surface film 110 may be a printing surface, which may be used for printing different patterns. In some examples, the surface film 110 may be made of at least one selected from the group consisting of PEN, PI, PET, PE, PP and PA. In addition, a thickness of the surface film 110 is preferably 12 µm to 150 µm, and within this range, the surface film has high tensile strength, smooth surface and good brightness. Additionally, when a bottom of the half-moon tab type closure liner 50 senses heat conduction, the surface film 110 can be prevented from being bonded with other external components (e.g., a bottle cap or the like).

### <<Bonding layer 200>>

The bonding layer 200 is disposed between the upper layer 100 and the sealing laminated layer 300. Taking FIG. 1A as an example, the bonding layer 200 includes a bonding adhesive 210A and a half moon tab layer 230, and the bonding layer 200 may laminate the upper layer 100 with the sealing laminated layer 300 through the bonding adhesive 210A, and an unbonded area is formed between the upper layer 100 and the sealing laminated layer 300. In some examples, for the half-moon tab type closure liner 50, a peeling strength between the upper layer 100 and the sealing laminated layer 300 may be greater than or equal to 17.8 N/15 mm through the bonding adhesive 210A, thereby realizing firm lamination. In some examples, taking FIG. 1A as an example, the bonding adhesive 210A may be a bonding glue, which makes the peeling strength between the upper layer 100 and the sealing laminated layer 300 greater than or equal to 17.8 N/15 mm, thereby realizing firm lamination, which is not limited thereto. In some examples, the bonding adhesive 210A may be a dry compound adhesive or the aforementioned hot melt lamination glue, but is not limited thereto.

The bonding layer 200 is disposed between the upper layer 100 and the sealing laminated layer 300. Taking FIG. 1B as an example, the bonding layer 200 includes a hot melt lamination glue 270 and a half moon tab layer 230, and the bonding layer 200 may laminate the upper layer 100 with the sealing laminated layer 300 through the hot melt lamination glue 270, and an unbonded area is formed between the upper layer 100 and the sealing laminated layer 300. In some examples, for the half-moon tab type closure liner 50, a peeling strength between the upper layer 100 and the sealing laminated layer 300 may be greater than or equal to 17.8 N/15 mm through the hot melt lamination glue 270, thereby realizing firm lamination. In some examples, the hot melt lamination glue 270 may be made of at least one selected from the group consisting of PE, PP, EMAA, EAA, EEA, EMAC and EMMA. In addition, a thickness of the hot melt lamination glue 270 is preferably 4 µm to 60 µm.

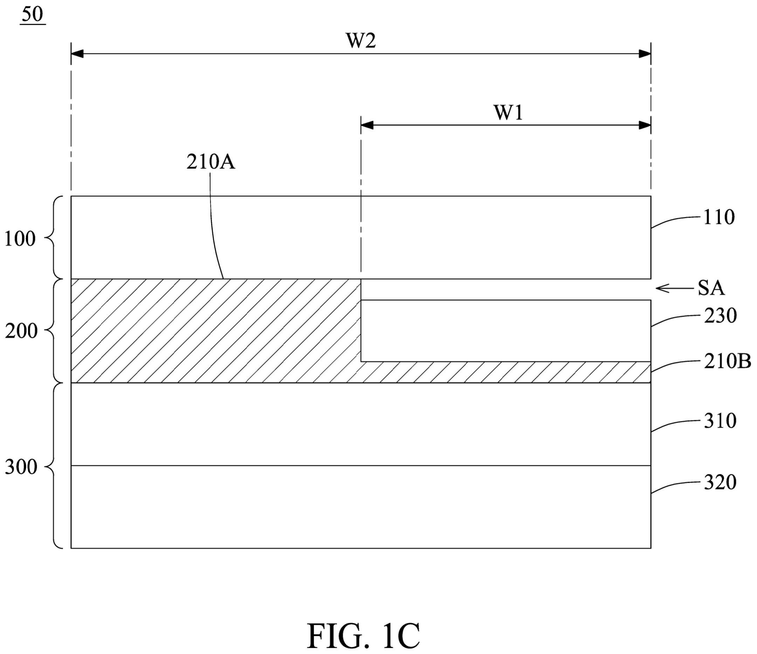

The half moon tab layer 230 is disposed in the unbonded area, and the half moon tab layer 230 may be laminated with one of the upper layer 100 and the sealing laminated layer 300 described later through the laminating adhesive 210B. That is, the half moon tab layer 230 shown in FIG. 1A is only laminated with the upper layer 100 through the laminating adhesive 210B (not laminated with the sealing laminated layer 300 through the laminating adhesive 210B), or the half moon tab layer 230 shown in FIG. 1C is only laminated with the sealing laminated layer 300 through the laminating adhesive 210B (not laminated with the upper layer 100 through the laminating adhesive 210B).

Taking FIG. 1A as an example, the half moon tab layer 230 is disposed in the unbonded area, and the half moon tab layer 230 may be laminated with the upper layer 100 through the laminating adhesive 210B. In addition, in some examples, for the half-moon tab type closure liner 50, a peeling strength between the upper layer 100 and the half moon tab layer 230 may be greater than or equal to 17.8 N/15 mm through the laminating adhesive 210B, thereby realizing firm lamination. In some examples, taking FIG. 1A as an example, the laminating adhesive 210B may be a dry compound adhesive or the aforementioned hot melt lamination glue, which makes the peeling strength between the upper layer 100 and the half moon tab layer 230 greater than or equal to 17.8 N/15 mm, thereby realizing firm lamination, which is not limited thereto. In some examples, in order to improve the manufacturing convenience, the laminating adhesive 210B may be the same as the bonding adhesive 210A, i.e., the same adhesive (e.g., the hot melt lamination glue 270 shown in FIG. 1B) is used as the bonding adhesive 210A and the laminating adhesive 210B. In some examples, the bonding adhesive 210A and the laminating adhesive 210B may be coated at the same time as the same adhesive.

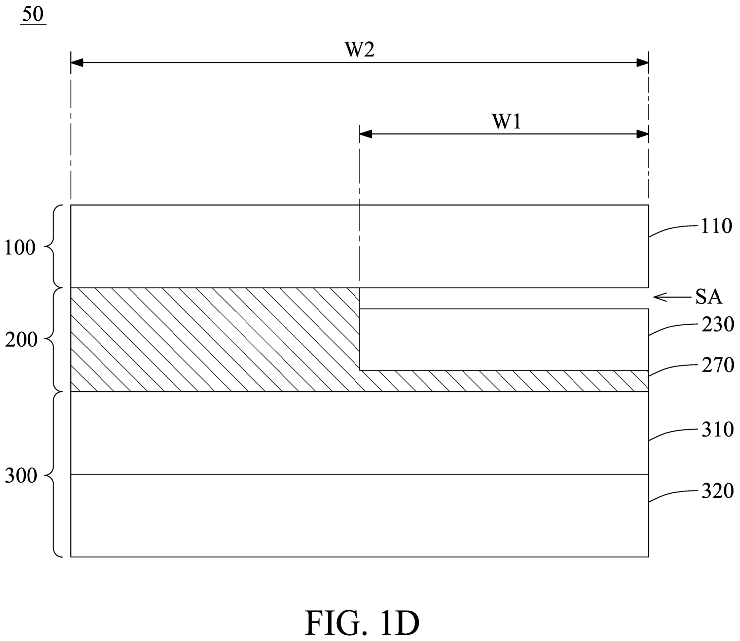

Referring to FIG. 1C and FIG. 1D, FIG. 1C is a schematic sectional view for illustrating local changes of the half-moon tab type closure liner 50 shown in FIG. 1A, and FIG. 1D is a schematic sectional view for illustrating local changes of the half-moon tab type closure liner shown 50 in FIG. 1C.

Taking FIG. 1C as an example, the half moon tab layer 230 is disposed in the unbonded area, and the half moon tab layer 230 may be laminated with the sealing laminated layer 300 through the laminating adhesive 210B. In addition, in some examples, for the half-moon tab type closure liner 50, a peeling strength between the half moon tab layer 230 and the sealing laminated layer 300 may be greater than or equal to 17.8 N/15 mm through the aforementioned laminating adhesive 210B such as the hot melt lamination glue or the dry compound adhesive, thereby realizing firm lamination. Additionally, in some examples, in order to improve the manufacturing convenience, the laminating adhesive 210B may be the same as the bonding adhesive 210A, i.e., the same adhesive (e.g., the hot melt lamination glue 270 shown in FIG. 1D) is used as the bonding adhesive 210A and the laminating adhesive 210B. In some examples, the bonding adhesive 210A and the laminating adhesive 210B may be coated at the same time as the same adhesive.

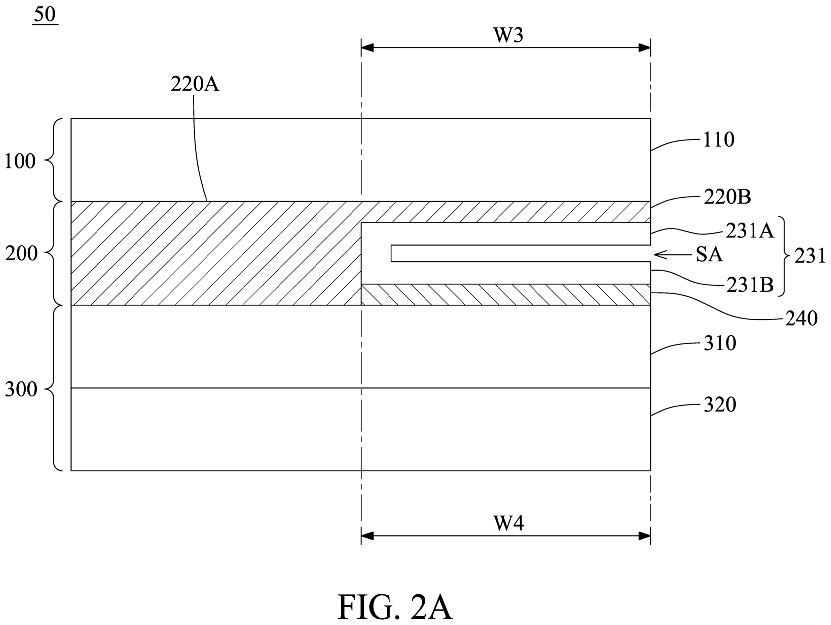

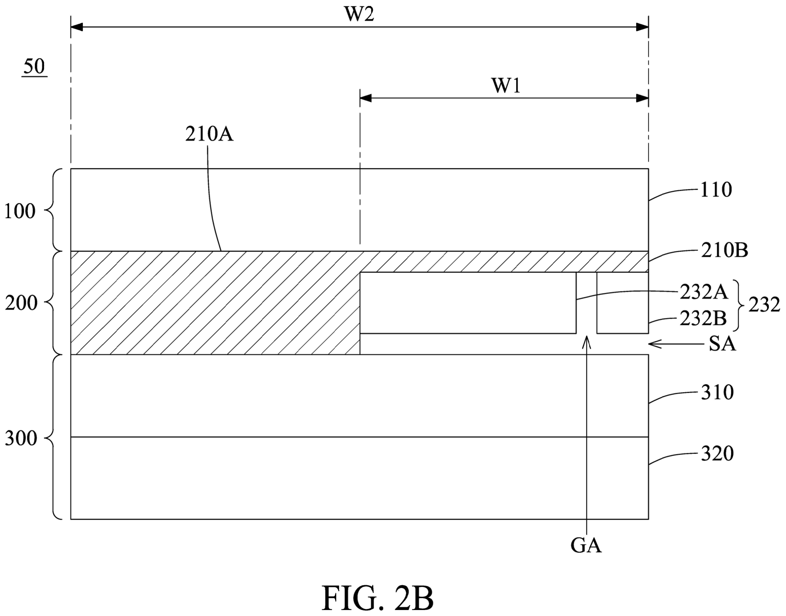

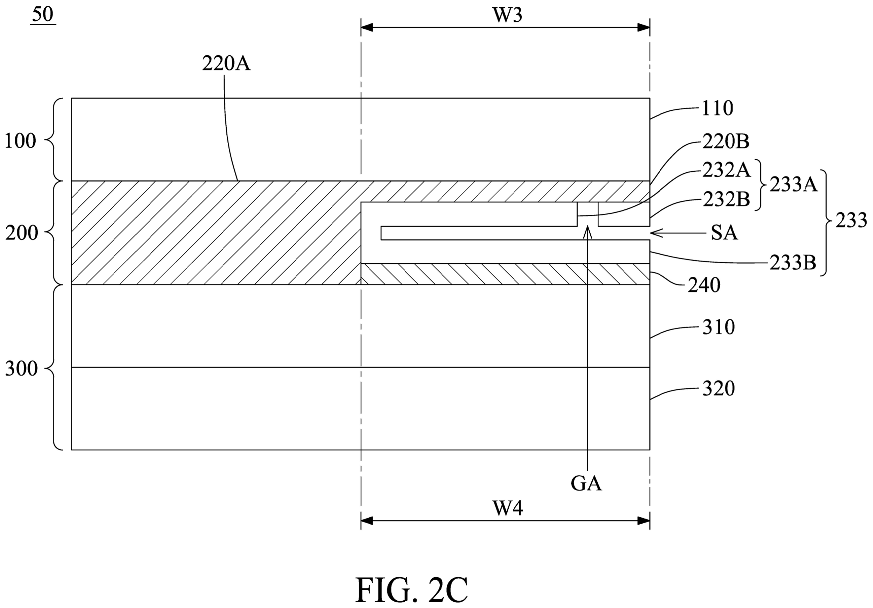

In some examples, taking FIG. 1A as an example, as shown in FIG. 1A, the half moon tab layer 230 may be a one-piece half moon tab film. In some examples, the one-piece half moon tab film may be made of at least one selected from the group consisting of paper, PET, PP, PA, PEN and PI, which is not limited thereto. In addition, a thickness of the one-piece half moon tab film is preferably 12 µm to 50 µm. Besides, in other examples, the half moon tab layer 230 may be an opposite-fold half moon tab film (as shown in FIG. 2A), a spliced half moon tab film (as shown in FIG. 2B) or an opposite-fold spliced half moon tab film (as shown in FIG. 2C).

Taking the one-piece half moon tab film or the spliced half moon tab film 232 as an example, a void area SA is formed between the half moon tab layer 230 and the sealing laminated layer 300, thereby ensuring the half moon tab layer 230 and the sealing laminated layer 300 to be separated from each other (i.e., not laminated with each other), or a void area SA is formed between the spliced half moon tab film 232 and the sealing laminated layer 300, thereby ensuring the spliced half moon tab film 232 and the sealing laminated layer 300 to be separated from each other (i.e., not laminated with each other), so that the user can easily open the half-moon tab type closure liner 50 directly with a hand without using a foreign tool.

In addition, taking the opposite-fold half moon tab film 231 or the opposite-fold spliced half moon tab film 233 as an example, the half moon tab layer 230 may be laminated with the sealing laminated layer 300 through a binder 240, and for the half-moon tab type closure liner 50, a peeling strength between the sealing laminated layer 300 and the half moon tab layer 230 may be greater than or equal to 4 N/15 mm through the binder 240. In some examples, the binder 240 may be a dry compound adhesive or the aforementioned hot melt lamination glue, but is not limited thereto. Although the half moon tab layer can be laminated with the sealing laminated layer 300 through the binder 240, since the opposite-fold half moon tab film 231 or the opposite-fold spliced half moon tab film 233 in the half moon tab layer may include an up-fold half moon tab film and a down-fold half moon tab film, and a void area is formed between the up-fold half moon tab film and the down-fold half moon tab film, this can ensure the up-fold half moon tab film and the down-fold half moon tab film to be separated from each other (i.e., not laminated with each other), so that the user can easily open the half-moon tab type closure liner 50 directly with a hand without using a foreign tool.

Still referring to FIG. 1A, in some examples, a sectional width W1 of the half moon tab layer 230 is greater than or equal to one-sixth of a sectional width W2 of the half-moon tab type closure liner 50, and the sectional width W1 of the half moon tab layer 230 is less than or equal to five-sixths of the sectional width W2 of the half-moon tab type closure liner 50. When the closure liner has a larger diameter, the sectional width of the half moon tab layer 230 can be smaller. When the closure liner has a smaller diameter, the sectional width of the half moon tab layer 230 can be larger. Additionally, the half moon tab layer 230 is not limited to a semicircular shape, so as to increase design flexibility for the user.

### <<Sealing laminated layer 300>>

The sealing laminated layer 300 is disposed at a lowermost layer of the half-moon tab type closure liner 50. Taking FIG. 1A as an example, the sealing laminated layer 300 sequentially includes an electromagnetic induction heating layer 310 and a sealing layer 320 from top to bottom. The electromagnetic induction heating layer 310 may be an aluminum foil or a wireless information integrated flake described later. The aluminum foil is an existing structure in a conventional closure liner. A thickness of the aluminum foil is preferably 10 µm to 40 µm, which can enhance the barrier function to moisture and oxygen, thereby preventing the contents from leakage and preserving the contents airtightly. In addition, the wireless information integrated flake described later may be used instead of the aluminum foil, which can effectively reduce the amount of the aluminum foil used and lower the energy consumption. Specifically, the wireless information integrated flake of the disclosure can add a wireless information transmission function, reduce the waste of the aluminum foil, lower the energy consumption, avoid the waste of manpower and interference of metal and liquid and improve the production efficiency, and has good communication performance and greatly increased communication distance, thereby greatly improving the development of automation, digitalization and intelligence of factories, warehouses, logistics, shops and unmanned cashier management. In some embodiments, a thickness of the wireless information integrated flake is preferably 27 µm to 2.5 mm.

The sealing layer 320 is mainly used for sealing the container opening. In some examples, the sealing layer 320 may be, for example, a hot melt glue. The hot melt glue may be made of at least one selected from the group consisting of EVA, PIB, EBA, EAA, EMAC, polyacrylate, polyacetate and EMAA, which is not limited thereto. In addition, a thickness of the hot melt glue is preferably 4 µm to 100 µm. The use of the combination of several hot melt glues can achieve a continuous sealing effect without using a binding agent even if the contents in the glass container contain water, and can also achieve a continuous sealing effect in a case that the contents in the glass container contain chili, garlic, fermented bean curd, honey and spices.

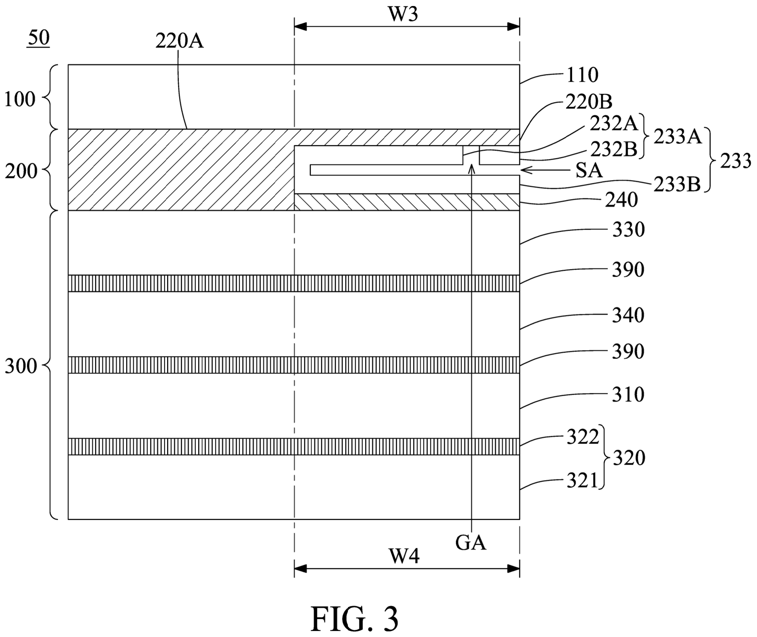

In addition, in another example (referring to FIG. 3 to FIG. 5), taking FIG. 3 as an example, the sealing layer 320 may be a combination of a sealing film 321 and a binding agent 322, and the binding agent 322 is located between the sealing film 321 and the electromagnetic induction heating layer 310. In some examples, the sealing film 321 may be made of at least one selected from the group consisting of PE, PP, PA, PVDC, EVOH and PET, and a thickness of the sealing film 321 is preferably 12 µm to 100 µm. The binding agent 322 may be a conventional binding agent (e.g., a dry compound adhesive or the like), but is not limited thereto.

As described above, when the sealing layer 320 is the hot melt glue or a combination of the sealing film and the binding agent, the user can open the half-moon tab type closure liner 50 from the bottle opening more easily, or the user can remove the half-moon tab type closure liner 50 from the bottle opening more easily and cleanly.

Accordingly, the half-moon tab type closure liner 50 shown in FIG. 1A can prevent the contents from leakage and from deterioration due to the influence of the external environment, and the user can easily open the half-moon tab type closure liner 50 at the container opening by directly pinching the half moon tab layer 230 and the surface film 110 without using a foreign tool, thereby further improving the convenience for opening. That is, the half-moon tab type closure liner 50 shown in FIG. 1A can ensure both the airtightness for preserving the contents and the user's convenience for opening.

Besides, although not shown, the layers of the half-moon tab type closure liner 50 of this example can be laminated by various ways (e.g., adhesion, bonding or connection).

Referring to FIG. 2A, FIG. 2A is a schematic sectional view for illustrating the half-moon tab type closure liner 50 of a second example of the disclosure. More specifically, FIG. 2A shows an embodiment where the half moon tab layer is an opposite-fold half moon tab film 231, in which a bonding agent 220A and a laminating agent 220B are respectively used instead of the bonding adhesive 210A and the laminating adhesive 210B shown in FIG. 1A, and other components are substantially the same as those in the half-moon tab type closure liner 50 shown in FIG. 1A and will not be repeated here.

In some examples, the bonding agent 220A used in FIG. 2A may be a dry compound adhesive or the aforementioned hot melt lamination glue, which makes a peeling strength between the upper layer 100 and the sealing laminated layer 300 greater than or equal to 4 N/15 mm, and the laminating agent 220B used in FIG. 2A may be a dry compound adhesive or the aforementioned hot melt lamination glue, which makes a peeling strength between the upper layer 100 and the half moon tab layer 230 greater than or equal to 4 N/15 mm.

Taking FIG. 2A as an example, the half moon tab layer may include the opposite-fold half moon tab film 231. The opposite-fold half moon tab film 231 may include an up-fold half moon tab film 231A and a down-fold half moon tab film 231B. The up-fold half moon tab film 231A is laminated with the upper layer 100, the down-fold half moon tab film 231B is laminated with the sealing laminated layer 300, and a void area SA is formed between the up-fold half moon tab film 231A and the down-fold half moon tab film 231B. In some examples, the up-fold half moon tab film 231A and the down-fold half moon tab film 231B may be respectively made of at least one selected from the group consisting of PA, PP, PET, PEN and PI, which is not limited thereto. In addition, thicknesses of the up-fold half moon tab film 231A and the down-fold half moon tab film 231B are respectively preferably 12 µm to 24 µm. With this disposition, the opposite-fold half moon tab film 231 has a large breaking strength, and in this case, the user opens the half-moon tab type closure liner 50 from the container opening by pinching the half-moon tab type closure liner mainly due to the strong breaking strength of the opposite-fold half moon tab film 231.

As shown in FIG. 2A, the up-fold half moon tab film 231A of the opposite-fold half moon tab film 231 in the half moon tab layer may be laminated with the surface film 110 in the upper layer 100 through the laminating agent 220B, and for the half-moon tab type closure liner 50, a peeling strength between the upper layer 100 and the half moon tab layer may be greater than or equal to 4 N/15 mm through the laminating agent 220B. In addition, the down-fold half moon tab film 231B of the opposite-fold half moon tab film 231 in the half moon tab layer may be laminated with the electromagnetic induction heating layer 310 in the sealing laminated layer 300 through the binder 240, and for the half-moon tab type closure liner 50, a peeling strength between the sealing laminated layer 300 and the half moon tab layer may be greater than or equal to 4 N/15 mm through the binder 240.

For the conventional closure liner, a high peeling strength is needed between the half moon tab layer and the layer thereunder in some cases, which makes it difficult for the conventional closure liner to laminate the half moon tab layer and the layer thereunder. In the half-moon tab type closure liner 50 shown in FIG. 2A, the void area SA may be formed between the up-fold half moon tab film 231A and the down-fold half moon tab film 231B, thereby ensuring the up-fold half moon tab film 231A and the down-fold half moon tab film 231B to be separated from each other (i.e., not laminated with each other), so that the user can easily open the half-moon tab type closure liner 50 directly with a hand without using a foreign tool. Additionally, the opposite-fold half moon tab film 231 may be a film with a small elongation at break and a large breaking strength (made of PA or PP or PET or PEN or PI), so that the large breaking strength of the film can be utilized to greatly enhance the insufficient peeling strength between the half moon tab layer and layer thereunder.

In some examples, a sectional width W3 of the up-fold half moon tab film 231A may be less than or equal to a sectional width W4 of the down-fold half moon tab film 231B. When the sectional width W3 of the up-fold half moon tab film 231A is less than the sectional width W4 of the down-fold half moon tab film 231B, there will be a little space at an outermost edge of the up-fold half moon tab film 231A, and there will be air in this space. In this case, even if the sealing laminated layer 300 is very thin, the user can easily open the half moon tab film directly with a hand, so that the user can easily open the half-moon tab type closure liner 50 directly with a hand without using a foreign tool.

Referring to FIG. 2B, FIG. 2B is a schematic sectional view for illustrating the half-moon tab type closure liner 50 of a third example of the disclosure. More specifically, FIG. 2B shows an embodiment where the half moon tab layer is a spliced half moon tab film 232, and other components are substantially the same as those in the half-moon tab type closure liner 50 shown in FIG. 1A and will not be repeated here.

In some examples, the bonding adhesive 210A used in FIG. 2B may be a dry compound adhesive or the aforementioned hot melt lamination glue, which makes a peeling strength between the upper layer 100 and the sealing laminated layer 300 greater than or equal to 17.8 N/15 mm, and the laminating adhesive 210B used in FIG. 2B may be a dry compound adhesive or the aforementioned hot melt lamination glue which is coated or extrusion-coated at the same time by a sandwich method.

Taking FIG. 2B as an example, the half moon tab layer may include the spliced half moon tab film 232. The spliced half moon tab film 232 may include a first half moon tab film 232A and a second half moon tab film 232B, and a gap area GA is formed between the first half moon tab film 232A and the second half moon tab film 232B. In some examples, the first half moon tab film 232A may be made of at least one selected from the group consisting of PP, PET, PA, PEN and PI, which is not limited thereto. In some examples, the second half moon tab film 232B may be made of at least one selected from the group consisting of paper, PP, PET, PA, PEN and PI, which is not limited thereto. In addition, a thickness of the spliced half moon tab film 232 is preferably 12 µm to 50 µm.

In the half-moon tab type closure liner 50 shown in FIG. 2B, the void area SA may be formed between the half moon tab layer and the sealing laminated layer 300, thereby ensuring the half moon tab layer and the sealing laminated layer 300 to be separated from each other (i.e., not laminated with each other), so that the user can easily open the half-moon tab type closure liner 50 directly with a hand without using a foreign tool.

In the case where the half-moon tab type closure liner 50 uses the spliced half moon tab film 232, when the space reserved at the splice (i.e., the gap area GA) undergoes the interaction of thermal expansion and extrusion of the cap edge during electromagnetic induction sealing, a certain space will be reserved at the splice (i.e., the gap area GA) of the half-moon tab type closure liner 50 shown in FIG. 2B, so that the user can open the half moon tab layer more easily.

Referring to FIG. 2C, FIG. 2C is a schematic sectional view for illustrating the half-moon tab type closure liner 50 of a fourth example of the disclosure. More specifically, FIG. 2C shows an embodiment where the half moon tab layer is an opposite-fold spliced half moon tab film 233, in which a bonding agent 220A and a laminating agent 220B are respectively used instead of the bonding adhesive 210A and the laminating adhesive 210B shown in FIG. 1A, and other components are substantially the same as those in the half-moon tab type closure liner 50 shown in FIG. 1A and will not be repeated here.

In some examples, the bonding agent 220A used in FIG. 2C may be a dry compound adhesive or the aforementioned hot melt lamination glue, which makes a peeling strength between the upper layer 100 and the sealing laminated layer 300 greater than or equal to 4 N/15 mm, and the laminating agent 220B used in FIG. 2C may be a dry compound adhesive or the aforementioned hot melt lamination glue, which makes a peeling strength between the upper layer 100 and the half moon tab layer 230 greater than or equal to 4 N/15 mm.

Taking FIG. 2C as an example, the half moon tab layer may include the opposite-fold spliced half moon tab film 233. The opposite-fold spliced half moon tab film 233 may include an up-fold half moon tab film 233A and a down-fold half moon tab film 233B. The up-fold half moon tab film 233A is laminated with the upper layer 100, the down-fold half moon tab film 233B is laminated with the sealing laminated layer 300, and a void area SA is formed between the up-fold half moon tab film 233A and the down-fold half moon tab film 233B. The up-fold half moon tab film 233A may include a first half moon tab film 232A and a second half moon tab film 232B, and a gap area GA is formed between the first half moon tab film 232A and the second half moon tab film 232B. In some examples, the first half moon tab film 232A of the up-fold half moon tab film 233A and the down-fold half moon tab film 233B may be respectively made of at least one selected from the group consisting of PA, PP, PET, PEN and PI, which is not limited thereto. In addition, thicknesses of the first half moon tab film 232A of the up-fold half moon tab film 233A and the down-fold half moon tab film 233B are respectively preferably 12 µm to 24 µm. The second half moon tab film 232B of the up-fold half moon tab film 233A may be made of at least one selected from the group consisting of paper, PA, PP, PET, PEN and PI, and a thickness of the second half moon tab film 232B of the up-fold half moon tab film 233A is preferably 12 µm to 50 µm. With this disposition, the opposite-fold spliced half moon tab film 233 has a large breaking strength, and in this case, the user opens the half-moon tab type closure liner 50 from the container opening by pinching the half-moon tab type closure liner mainly due to the strong breaking strength of the opposite-fold spliced half moon tab film 233.

As shown in FIG. 2C, the up-fold half moon tab film 233A of the opposite-fold spliced half moon tab film 233 in the half moon tab layer may be laminated with the surface film 110 in the upper layer 100 through the laminating agent 220B, and for the half-moon tab type closure liner 50, a peeling strength between the upper layer 100 and the half moon tab layer may be greater than or equal to 4 N/15 mm through the laminating agent 220B. In addition, the down-fold half moon tab film 233B of the opposite-fold spliced half moon tab film 233 in the half moon tab layer may be laminated with the electromagnetic induction heating layer 310 in the sealing laminated layer 300 through the binder 240, and for the half-moon tab type closure liner 50, a peeling strength between the sealing laminated layer 300 and the half moon tab layer may be greater than or equal to 4 N/15 mm through the binder 240.

In the half-moon tab type closure liner 50 shown in FIG. 2C, the void area SA may be formed between the up-fold half moon tab film 233A and the down-fold half moon tab film 233B, thereby ensuring the up-fold half moon tab film 233A and the down-fold half moon tab film 233B to be separated from each other (i.e., not laminated with each other), so that the user can easily open the half-moon tab type closure liner 50 directly with a hand without using a foreign tool.

For the conventional closure liner, a high peeling strength is needed between the half moon tab layer and the layer thereunder in some cases, which makes it difficult for the conventional closure liner to laminate the half moon tab layer and the layer thereunder. In the case where the half-moon tab type closure liner 50 uses the opposite-fold spliced half moon tab film 233, when the space reserved at the splice (i.e., the gap area GA formed between the first half moon tab film 232A and the second half moon tab film 232B) undergoes the interaction of thermal expansion and extrusion of the cap edge during electromagnetic induction sealing, a certain space will be reserved at the splice (i.e., the gap area GA) of the half-moon tab type closure liner 50 shown in FIG. 2C, so that the user can open the half moon tab layer more easily. Additionally, the opposite-fold spliced half moon tab film 233 may be a film with a small elongation at break and a large breaking strength (made of PA or PP or PET or PEN or PI), so that the large breaking strength of the film can be utilized to greatly enhance the insufficient peeling strength between the half moon tab layer and layer thereunder. In some examples, the first half moon tab film 232A and the second half moon tab film 232B may be made of different materials.

Referring to FIG. 3, FIG. 3 is a schematic sectional view for illustrating the half-moon tab type closure liner 50 of a fifth example of the disclosure. More specifically, the sealing laminated layer 300 of the half-moon tab type closure liner 50 shown in FIG. 3 further includes a bonding film 330 and a protective film 340, and other components are substantially the same as those in the half-moon tab type closure liner 50 shown in FIG. 2C and will not be repeated here.

### <<Bonding film 330>>

The bonding film 330 is disposed at an uppermost layer of the sealing laminated layer 300, and configured to be laminated with the surface film 110 of the upper layer 100 and the opposite-fold spliced half moon tab film 233 of the half moon tab layer. More specifically, the bonding film 330 is laminated with the surface film 110 of the upper layer 100 through the bonding agent 220A, and laminated with the down-fold half moon tab film 233B of the opposite-fold spliced half moon tab film 233 of the half moon tab layer through the binder 240. In some examples, the bonding film 330 may be made of at least one selected from the group consisting of PE, PP, PA, EPP and EPE, and a thickness of the bonding film 330 is preferably 12 µm to 200 µm. Accordingly, the peeling strength between the bonding film 330, and the upper layer 100 and/or the opposite-fold spliced half moon tab film 233 after lamination can be improved.

### <<Protective film 340>>

Taking FIG. 3 as an example, the protective film 340 is disposed between the bonding film 330 and the electromagnetic induction heating layer 310. In some examples, the protective film 340 may be made of at least one selected from the group consisting of PET, PA and PP, and a thickness of the protective film 340 is preferably 12 µm to 50 µm. Accordingly, when the protective film 340 is sequentially laminated with the bonding film 330, the wireless information integrated flake containing an antenna and a chip, and the sealing layer 320, the chip in the wireless information integrated flake can be prevented from damage.

In addition, taking FIG. 3 as an example, a binding agent 390 may be used to laminate the bonding film 330 and the protective film 340, and laminate the protective film 340 and the electromagnetic induction heating layer 310. In some examples, the binding agent 390 may be a conventional binding agent, such as a dry compound adhesive or the aforementioned hot melt lamination glue, but is not limited thereto. In some examples, through the binding agent 390, a peeling strength between the two laminated layers (e.g., the bonding film 330 and the protective film 340) may be greater than or equal to 4 N/15 mm.

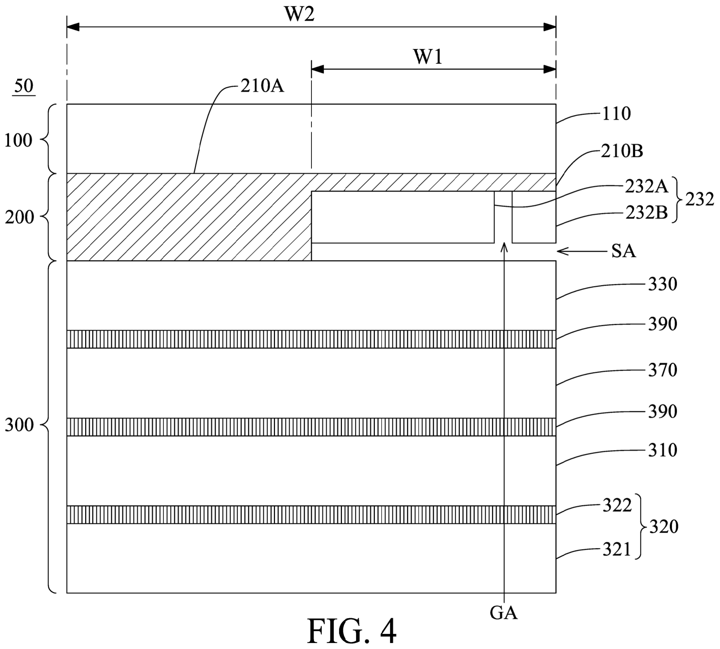

Referring to FIG. 4, FIG. 4 is a schematic sectional view for illustrating the half-moon tab type closure liner 50 of a sixth example of the disclosure. More specifically, the sealing laminated layer 300 of the half-moon tab type closure liner 50 shown in FIG. 4 further includes a bonding film 330 and a laminating film 370, and other components are substantially the same as those in the half-moon tab type closure liner 50 shown in FIG. 2B and will not be repeated here. Besides, the bonding film 330 is substantially the same as the content described in FIG. 3 and will not be repeated here.

### << Laminating film 370>>

Taking FIG. 4 as an example, the laminating film 370 is disposed above the electromagnetic induction heating layer 310. More specifically, the laminating film 370 is disposed between the bonding film 330 and the electromagnetic induction heating layer 310, and configured to improve the tensile strength of the half-moon tab type closure liner 50. In some examples, the laminating film 370 may be made of at least one selected from the group consisting of PP, PET, PEN, PE and PA, and a thickness of the laminating film 370 is preferably 12 µm to 100 µm.

In addition, taking FIG. 4 as an example, a binding agent 390 may be used to laminate the bonding film 330 and the laminating film 370, and laminate the electromagnetic induction heating layer 310 and the laminating film 370.

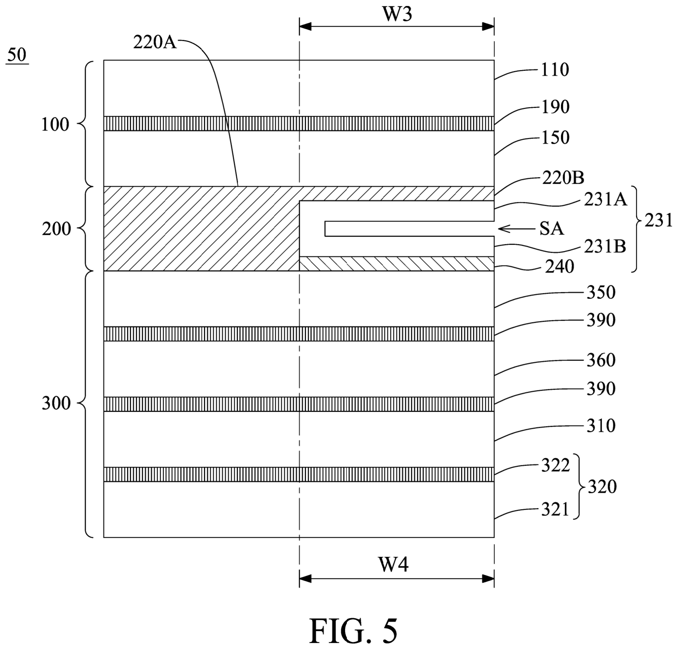

Referring to FIG. 5, FIG. 5 is a schematic sectional view for illustrating the half-moon tab type closure liner 50 of a seventh example of the disclosure. More specifically, the upper layer 100 of the half-moon tab type closure liner 50 shown in FIG. 5 further includes a first bonding film 150, and the sealing laminated layer 300 further includes a second bonding film 350 and a thickening layer 360. Other components are substantially the same as those in the half-moon tab type closure liner 50 shown in FIG. 2A and will not be repeated here.

### <<First bonding film 150>>

The first bonding film 150 is disposed at an undermost layer of the upper layer 100, and configured to be laminated with the sealing laminated layer 300 and the half moon tab layer. Taking FIG. 5 as an example, the first bonding film 150 is laminated with the second bonding film 350 of the sealing laminated layer 300 through the bonding agent 220A, and laminated with the opposite-fold half moon tab film 231 in the half moon tab layer through the laminating agent 220B. In some examples, the first bonding film 150 may be made of at least one selected from the group consisting of PE, PP, PA, EMMA and EMAC, and a thickness of the first bonding film 150 is preferably 12 µm to 100 µm. Accordingly, the peeling strength between the first bonding film 150, and the second bonding film 350 of the sealing laminated layer 300 and the opposite-fold half moon tab film 231 of the half moon tab layer after lamination can be respectively improved.

### <<Second bonding film 350>>

The second bonding film 350 is disposed at an uppermost layer of the sealing laminated layer 300, and configured to be laminated with the upper layer 100 and the half moon tab layer. Taking FIG. 5 as an example, the second bonding film 350 is laminated with the first bonding film 150 of the upper layer 100 through the bonding agent 220A, and laminated with the opposite-fold half moon tab film 231 in the half moon tab layer through the binder 240. In some examples, the second bonding film 350 may be made of at least one selected from the group consisting of PE, PP, PA, EPP and EPE, and a thickness of the second bonding film 350 is preferably 12 µm to 200 µm. Accordingly, the peeling strength between the second bonding film 350, and the first bonding film 150 of the upper layer 100 and the opposite-fold half moon tab film 231 of the half moon tab layer after lamination can be respectively improved.

### <<Thickening layer 360>>

Taking FIG. 5 as an example, the thickening layer 360 is disposed above the electromagnetic induction heating layer 310 (specifically may be located between the second bonding film 350 and the electromagnetic induction heating layer 310), and configured to increase a thickness of the half-moon tab type closure liner 50. In some examples, the thickening layer 360 may be made of at least one selected from the group consisting of EPE, EPP, PE, PP and paper, and a thickness of the thickening layer 360 is preferably 60 µm to 2000 µm. Accordingly, the thickness of the half-moon tab type closure liner 50 can be increased.

In addition, taking FIG. 5 as an example, a binding agent 190 (which is substantially the same as the binding agent 390) may be used to laminate the surface film 110 and the first bonding film 150. The binding agent 390 may also be used to laminate the second bonding film 350 and the thickening layer 360, and laminate the thickening layer 360 and the electromagnetic induction heating layer 310.

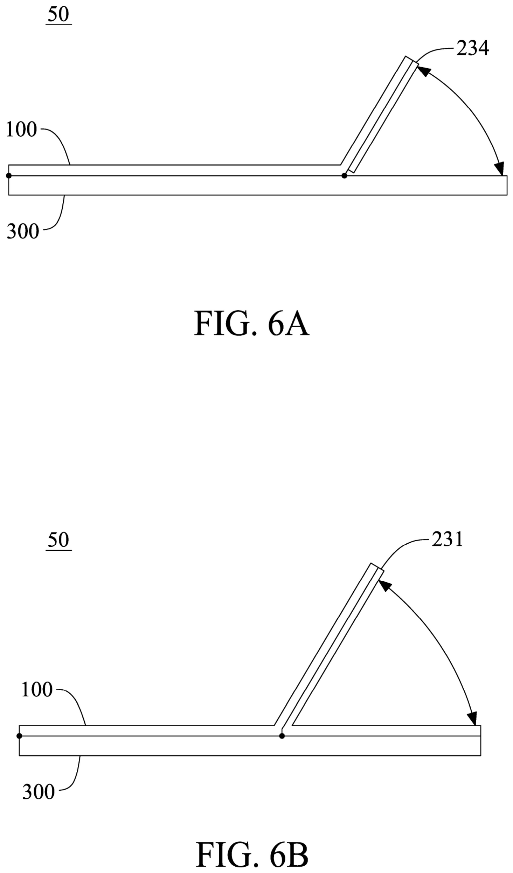

Referring to FIG. 6A to FIG. 6D, FIG. 6A to FIG. 6D are side views for illustrating the half-moon tab type closure liner 50 of the disclosure.

Taking FIG. 6A as an example, FIG. 6A is a side view for illustrating the half-moon tab type closure liner 50 shown in FIG. 1A and FIG. 1B. Since there is a void area (e.g., the void area SA shown in FIG. 1A and FIG. 1B) between the one-piece half moon tab film 234 in the half moon tab layer and the sealing laminated layer 300, the user can easily open the half-moon tab type closure liner 50 by directly pinching the one-piece half moon tab film 234 and the surface film with a hand, thereby further improving the convenience for opening.

In addition, taking FIG. 6B as an example, FIG. 6B is a side view for illustrating the half-moon tab type closure liner 50 shown in FIG. 2A. Since there is a void area (e.g., the void area SA shown in FIG. 2A) between the up-fold half moon tab film and the down-fold half moon tab film of the opposite-fold half moon tab film 231, the user can easily pull the half-moon tab type closure liner 50 open by directly pinching the up-fold half moon tab film of the opposite-fold half moon tab film 231 and the surface film with a hand, thereby further improving the convenience for opening.

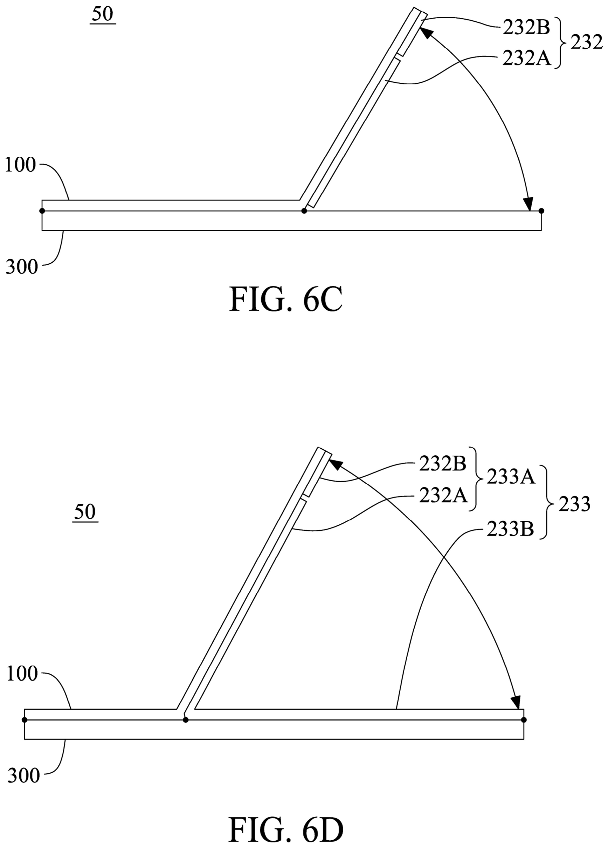

In addition, taking FIG. 6C as an example, FIG. 6C is a side view for illustrating the half-moon tab type closure liner 50 shown in FIG. 2B. Since there is a void area (e.g., the void area SA shown in FIG. 2B) between the spliced half moon tab film 232 in the half moon tab layer 230 and the sealing laminated layer 300, and there is a gap area (e.g., the gap area GA shown in FIG. 2B) between the first half moon tab film 232A and the second half moon tab film 232B, the user can easily pull the half-moon tab type closure liner 50 open by directly pinching the spliced half moon tab film 232 and the surface film with a hand, thereby further improving the convenience for opening.

In addition, taking FIG. 6D as an example, FIG. 6D is a side view for illustrating the half-moon tab type closure liner 50 shown in FIG. 2C. Since a void area (e.g., the void area SA shown in FIG. 2C) is formed between the up-fold half moon tab film and the down-fold half moon tab film of the opposite-fold spliced half moon tab film 233, and there is a gap area (e.g., the gap area GA shown in FIG. 2C) between the first half moon tab film and the second half moon tab film, the user can easily pull the half-moon tab type closure liner 50 open by directly pinching the up-fold half moon tab film of the opposite-fold spliced half moon tab film 233 and the surface film with a hand, thereby further improving the convenience for opening.

### [Wireless information integrated flake]

Next, the wireless information integrated flake used as the electromagnetic induction heating layer of the disclosure will be described.

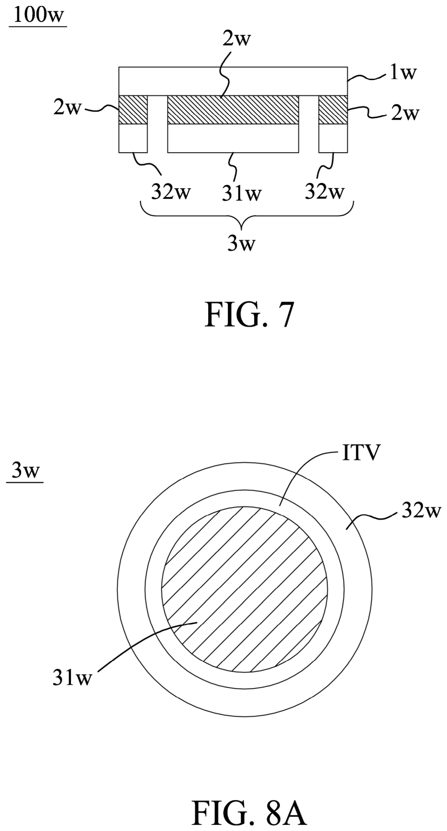

First, referring to FIG. 7, FIG. 7 is a schematic sectional view of the wireless information integrated flake 100w according to an example of the disclosure. As shown in FIG. 7, the wireless information integrated flake 100w according to an example of the disclosure includes: a base film 1w; a first binding layer 2w; and an information and heating layer 3w. The first binding layer 2w is located between the base film 1w and the information and heating layer 3w and bonds the base film 1w with the information and heating layer 3w. The layers will be respectively described in detail below.

The base film 1w is used for manufacturing an initial layer of the wireless information integrated flake. In a specific example, the base film 1w is made of at least one selected from the group consisting of PI, PEN, PET, polycarbonate (PC), PP and PE. In addition, a thickness of the base film 1w is preferably 20 µm to 150 µm, and within this range, the base film has high tensile strength both longitudinally and transversely. Besides, as shown in FIG. 7, a lower surface of the base film 1w is bonded with the first binding layer 2w, and an upper surface of the base film 1w may serve as a printing surface for printing different patterns.

The first binding layer is a layer for bonding the base film with the information and heating layer. In a specific example, the first binding layer 2w is only required to be able to bond the base film 1w with the information and heating layer 3w, and is made of a laminating adhesive. In addition, a thickness of the first binding layer 2w may be 0.5 µm to 7 µm, which makes a peeling strength between the two bonded layers greater than 4 N/15 mm.

The information and heating layer 3w includes an information area 31w and an electromagnetic induction heating ring 32w. The information area 31w has a wireless information read-write transmission function for subsequent product traceability. The information area 31w has an antenna 312w and a chip 311w connected to each other. In addition, the electromagnetic induction heating ring 32w can be heated by using electromagnetic induction through an electromagnetic field generated by an electromagnetic induction sealing machine, so that the sealing layer of the closure liner is melted by heating and adheres to the container opening, so as to seal the container opening as an electromagnetic induction closure liner. By including the wireless information integrated flake of the disclosure, most of the heat can be generated at the electromagnetic induction heating ring 32w, and very little heat can be conducted through at least one physical connection bridge 33w between the antenna 312w and the electromagnetic induction heating ring 32w. A length of the physical connection bridge 33w may be 0.1 mm to 3 mm, a width of the physical connection bridge 33w may be 0.01 mm to 5 mm, and the physical connection bridge 33w and the antenna 312w may be made of the same material. This can prevent a large amount of heat from being transferred to the central zone of the closure liner during electromagnetic induction sealing, and reduce the waste of energy. In addition, when the information and heating layer is applied to a battery-containing closure liner, the thickness of the information and heating layer may be 6 µm to 2.5 mm. When the information and heating layer is applied to a battery-free closure liner, the thickness of the information and heating layer may be 6 µm to 300 µm.

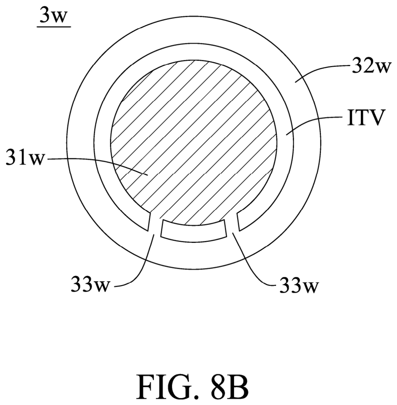

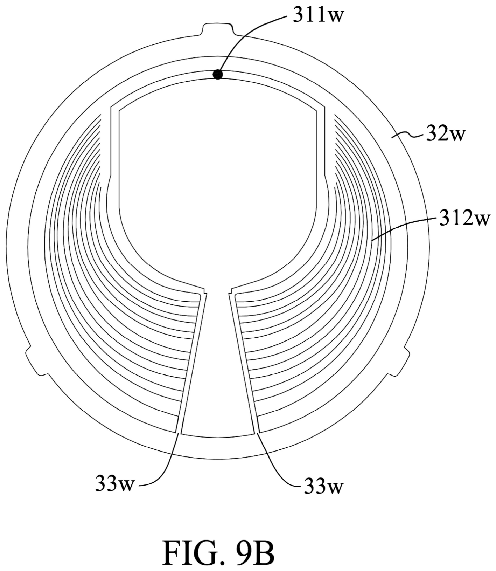

Next, FIG. 8A is a schematic plane view of the information and heating layer according to an example of the disclosure, and FIG. 8B is a schematic plane view of the information and heating layer according to another example of the disclosure. As shown in FIG. 8A or FIG. 8B, the electromagnetic induction heating ring 32w surrounds the information area 31w in a plane view angle. In addition, as shown in FIG. 8A, a spacing ITV is fully filled between the electromagnetic induction heating ring 32w and the information area 31w, i.e., there is no component for physical connection (e.g., the physical connection bridge described layer) between the electromagnetic induction heating ring 32w and the information area 31w. Accordingly, the spacing ITV filled between the electromagnetic induction heating ring 32w and the information area 31w can prevent heat from being transferred to the information area 31w during electromagnetic induction heating, providing a preferred embodiment. In addition, the spacing ITV (a space between an outermost edge of the information area 31w and an innermost edge of the electromagnetic induction heating ring 32w) may be 0.1 mm to 3 mm. Next, as shown in FIG. 8B, a spacing ITV is formed in most of the space between the electromagnetic induction heating ring 32w and the information area 31w. The spacing ITV can prevent most of the heat from being transferred to the information area 31w during electromagnetic induction heating, and the spacing ITV (a space between an outermost edge of the information area 31w and an innermost edge of the electromagnetic induction heating ring 32w) may be 0.1 mm to 3 mm. In addition, there may be at least one physical connection bridge 33w (2 physical connection bridges in FIG. 8B and FIG. 9B described later) between the antenna 312w and the electromagnetic induction heating ring 32w. A length of the physical connection bridges 33w may be 0.1 mm to 3 mm, and a width of the physical connection bridges 33w may be 0.01 mm to 5 mm. In this case, although the electromagnetic induction heating ring 32w with a closed loop structure is electrically connected to the information area 31w, the wireless communication distance will not be reduced too much. That is, the spacing ITV may be fully filled between the electromagnetic induction heating ring 32w and the information area 31w, the spacing ITV and the physical connection bridges 33w may exist at the same time, and there may be no spacing (e.g., the physical connection bridges 33w are fully filled between the electromagnetic induction heating ring 32w and the information area 31w).

In a specific example, the electromagnetic induction heating ring 32w may be made of metal, such as aluminum, copper, gold, silver or tin. In addition, from the perspective of the effect of generating heat when subjected to a changing electromagnetic field and the cost, the electromagnetic induction heating ring 32w is preferably an aluminum foil, which has a thickness of 6 µm to 40 µm.

On the other hand, the chip 311w may have a unique identifier and may be selected according to the purpose. For example, the chip may be a radio frequency identification near field communication (RFID_NFC) chip, a radio frequency identification high frequency (RFID_HF) chip, a radio frequency identification ultrahigh frequency (RFID_UHF) chip or a radio frequency identification microwave (RFID_MW) chip, which is not particularly limited. All these chips can be matched with the antenna 312w described later to realize the wireless information communication function.

Next, the antenna 312w mainly functions to generate a wireless transmission signal, and may be made of a metal, such as copper, silver, gold, tin or aluminum, which is not particularly limited.

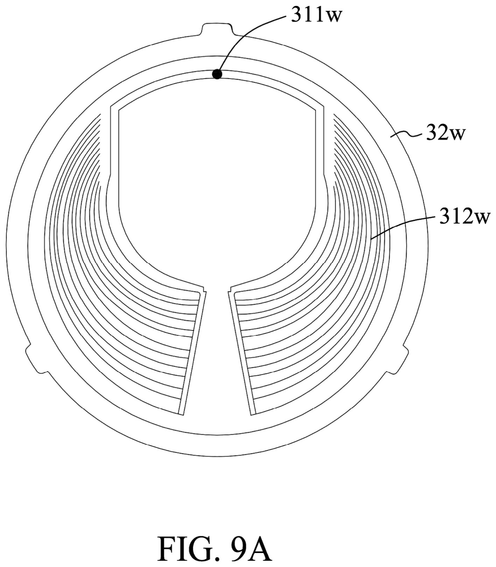

Then, FIG. 9A is a schematic plane view of a specific example of the information area according to an example of the disclosure, and FIG. 9B is a schematic plane view of a specific example of the information area according to another example of the disclosure. FIG. 9A corresponds to the embodiment where the spacing ITV is fully filled between the electromagnetic induction heating ring 32w and the information area 31w in FIG. 8A, and FIG. 9B corresponds to the embodiment where there is the spacing ITV in most of the space between the electromagnetic induction heating ring 32w and the information area 31w in FIG. 8B. In addition, as shown in FIG. 9A or FIG. 9B, the information area 31w includes the chip 311w and the antenna 312w. In addition, in a case that the wireless information transmission function can be realized, the chip 311w and the antenna 312w can be arranged in a way shown in FIG. 9A or FIG. 9B or other ways based on the RFID band that the user wants to use, which is not particularly limited.

Besides, although FIG. 7 shows the case where the base film 1w is at the top and the information and heating layer 3w is at the bottom, the base film 1w and the information and heating layer 3w may be reversed as required, i.e., the base film 1w may be at the bottom and the information and heating layer 3w may be at the top.

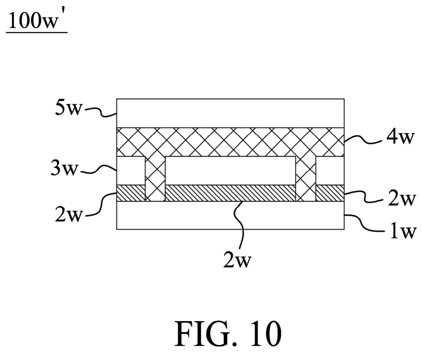

In addition, the wireless information integrated flake may also be a wireless information integrated flake 100w', which may include a protective layer 5w and a second binding layer 4w in addition to the base film 1w, the first binding layer 2w and the information and heating layer 3w, as shown in FIG. 10. The protective layer 5w is located on one side, away from the base film 1w, of the information and heating layer 3w. In addition, the second binding layer 4w is located between the information and heating layer 3w and the protective layer 5w and used as a layer for bonding the information and heating layer 3w with the protective layer 5w.

In a specific example, the second binding layer 4w is only required to be able to bond the information and heating layer 3w with the protective layer 5w, and may be made of, for example, a dry compound adhesive or the hot melt lamination glue described above, which is not particularly limited. In addition, a thickness of the second binding layer 4w may be 0.5 µm to 7 µm, which preferably makes a peeling strength between the two bonded layers greater than 4 N/15 mm. Besides, as shown in FIG. 10, the second binding layer 4w may extend to the spacing filled between the electromagnetic induction heating ring 32w and the information area 31w to improve the overall structural strength of the wireless information integrated flake 100w'.

Next, the protective layer 5w will be described. The protective layer 5w is used for protecting the information area 31w (i.e., the chip 311w, the antenna 312w and a battery that can be added additionally) from external damage to the chip 311w and the battery, which affects the wireless information transmission ability, and may be made of at least one selected from the group consisting of polyethylene terephthalate (PET), polypropylene (PP), polyethylene (PE), polyamide (PA), polyvinylidene chloride (PVDC), ethylene vinyl alcohol copolymer (EVOH), polyethylene naphthalate (PEN) and polyimide (PI). In addition, in a preferred specific example, a thickness of the protective layer 5w may be 12 µm to 100 µm.

Besides, both an upper surface and a lower surface of the protective layer 5w may serve as a printing surface. Therefore, although FIG. 10 shows the case where the base film 1w is at the bottom and the protective layer 5w is at the top (the upper surface of the protective layer 5w serves as the printing surface), the base film 1w and the protective layer 5w may be reversed as required, i.e., the base film 1w may be at the top and the protective layer 5w may be at the bottom (the lower surface of the protective layer 5w serves as the printing surface).

### [Method for manufacturing half-moon tab type closure liner (I)]

A method for manufacturing the half-moon tab type closure liner 50 shown in FIG. 3 will be further described here.

First, an upper surface of a protective film roll is coated with a binding agent, the upper surface of the protective film roll is dry-laminated with a lower surface of a bonding film roll, and after more than 24 hours in a curing chamber, a first laminated part roll is obtained.

Next, a protective film surface of the first laminated part roll is coated with the binding agent, the protective film surface of the first laminated part roll is dry-laminated with an upper surface of an electromagnetic induction heating layer roll, and after more than 24 hours in the curing chamber, a second laminated part roll is obtained.

Next, an electromagnetic induction heating layer surface of the second laminated part roll is coated with the binding agent, the electromagnetic induction heating layer surface of the second laminated part roll is dry-laminated with an upper surface of a sealing film roll, and after more than 24 hours in the curing chamber, a lower laminated part roll is obtained. Alternatively, the electromagnetic induction heating layer surface of the second laminated part roll is sprayed with a hot melt glue to obtain the lower laminated part roll (i.e., a sealing laminated layer roll).

Next, a spliced half moon tab film roll is folded and pressed into a dead fold (the dead fold here means a fold which is formed by strongly pressing a plastic film with a pressurized roller or plate and does not fading away easily, or a fold which is formed under the action of heat by making the heating temperature close to or slightly higher than the Vicat softening point of the plastic film by heating and does not easily fade away), thereby obtaining a dead-fold to-be-spliced half moon tab film roll.

Next, a lower surface of the dead-fold to-be-spliced half moon tab film roll is coated with a binder, the lower surface of the dead-fold to-be-spliced half moon tab film roll is dry-laminated with a bonding film surface of the lower laminated part roll, and after more than 24 hours in the curing chamber, a structural layer roll is obtained.

Next, a lower surface of the surface film roll is coated with a bonding agent and a laminating agent, an upper surface of the structural layer roll, an upper surface of a to-be-spliced second half moon tab film roll and the lower surface of the surface film roll are dry-laminated, and after more than 24 hours in the curing chamber, a half-moon tab type closure liner roll is obtained. Then, the half-moon tab type closure liner roll is cut to obtain the half-moon tab type closure liner with an appropriate size according to the user's needs.

Here, a peeling strength between the two layers laminated by the binding agent is greater than 4 N/15 mm; and a peeling strength between the two layers laminated by the bonding agent, the laminating agent and the binder is greater than 4 N/15 mm. The temperatures of the 5 sections of the heating tunnel above the dry compound machine are respectively 60°C to 65°C, 65°C to 70°C, 70°C to 75°C, 75°C to 80°C, and 80°C to 85°C. The temperature of the laminating press rollers of the dry compound machine is 50°C to 60°C. The temperature of the curing chamber is 50°C to 55°C.

### [Method for manufacturing half-moon tab type closure liner (II)]

A method for manufacturing the half-moon tab type closure liner 50 shown in FIG. 4 will be further described here.

First, an upper surface of an electromagnetic induction heating layer roll is coated with a binding agent, the upper surface of the electromagnetic induction heating layer roll is dry-laminated with a lower surface of a laminating film roll, and after more than 24 hours in a curing chamber, a first laminated part roll is obtained.

Next, a laminating film surface of the first laminated part roll is coated with the binding agent, the laminating film surface of the first laminated part roll is dry-laminated with a lower surface of a bonding film roll, and after more than 24 hours in the curing chamber, a second laminated part roll is obtained.

Next, an electromagnetic induction heating layer surface of the second laminated part roll is coated with the binding agent, the electromagnetic induction heating layer surface of the second laminated part roll is dry-laminated with an upper surface of a sealing film roll, and after more than 24 hours in the curing chamber, a lower laminated part roll is obtained. Alternatively, the electromagnetic induction heating layer surface of the second laminated part roll is sprayed with a hot melt glue to obtain the lower laminated part roll (i.e., a sealing laminated layer roll).

Next, a lower surface of the surface film roll is coated with a strong binding agent (a bonding adhesive and a laminating adhesive), a spliced half moon tab film roll is sandwiched therebetween, and the lower surface of the surface film roll, an upper surface of the spliced half moon tab film roll and a bonding film surface of the lower laminated part roll are dry-laminated by sandwich lamination, and after more than 24 hours in the curing chamber, a half-moon tab type closure liner roll is obtained. Then, the half-moon tab type closure liner roll is cut to obtain the half-moon tab type closure liner with an appropriate size according to the user's needs.

Here, a peeling strength between the two layers laminated by the binding agent is greater than 4 N/15 mm; and a peeling strength between the two layers laminated by the strong binding agent is greater than or equal to 17.8 N/15 mm. The temperatures of the 5 sections of the heating tunnel above the dry compound machine are respectively 60°C to 65°C, 65°C to 70°C, 70°C to 75°C, 75°C to 80°C, and 80°C to 85°C. The temperature of the laminating press rollers of the dry compound machine is 50°C to 60°C. The temperature of the curing chamber is 50°C to 55°C.

### [Method for manufacturing half-moon tab type closure liner (III)]

A method for manufacturing the half-moon tab type closure liner 50 shown in FIG. 5 will be further described here.

First, an upper surface of an electromagnetic induction heating layer roll is coated with a binding agent, the upper surface of the electromagnetic induction heating layer roll is dry-laminated with a lower surface of a thickening layer roll, and after more than 24 hours in a curing chamber, a first laminated part roll is obtained.

Next, a thickening layer surface of the first laminated part roll is coated with the binding agent, the thickening layer surface of the first laminated part roll is dry-laminated with a lower surface of a second bonding film roll, and after more than 24 hours in the curing chamber, a second laminated part roll is obtained.

Next, an electromagnetic induction heating layer surface of the second laminated part roll is coated with the binding agent, the electromagnetic induction heating layer surface of the second laminated part roll is dry-laminated with an upper surface of a sealing film roll, and after more than 24 hours in the curing chamber, a lower laminated part roll is obtained. Alternatively, the electromagnetic induction heating layer surface of the second laminated part roll is sprayed with a hot melt glue to obtain the lower laminated part roll (i.e., a sealing laminated layer roll).

Next, in a manner where the sectional width of the up-fold half moon tab film is less than or equal to the sectional width of the down-fold half moon tab film, and a tab film roll is folded oppositely and pressed into a dead fold, thereby obtaining an opposite-fold half moon tab film roll.

Next, a lower surface of the opposite-fold half moon tab film roll is coated with a binder, the lower surface of the opposite-fold half moon tab film roll is dry-laminated with a second bonding film surface of the lower laminated part roll, and after more than 24 hours in a curing chamber, a structural layer roll is obtained.

Next, a lower surface of the surface film roll is coated with the binding agent, the lower surface of the surface film roll is dry-laminated with an upper surface of a first bonding film roll, and after more than 24 hours in the curing chamber, an upper laminated part roll (i.e., an upper layer roll) is obtained.

Next, a first bonding film surface of the upper laminated part roll is coated with a bonding agent and a laminating agent, the first bonding film surface of the upper laminated part roll is dry-laminated with an upper surface of the structural layer roll, and after more than 24 hours in the curing chamber, a half-moon tab type closure liner roll is obtained. Then, the half-moon tab type closure liner roll is cut to obtain the half-moon tab type closure liner with an appropriate size according to the user's needs.

Here, a peeling strength between the two layers laminated by the binding agent is greater than 4 N/15 mm; and a peeling strength between the two layers laminated by the bonding agent, the laminating agent and the binder is greater than 4 N/15 mm. The temperatures of the 5 sections of the heating tunnel above the dry compound machine are respectively 60°C to 65°C, 65°C to 70°C, 70°C to 75°C, 75°C to 80°C, and 80°C to 85°C. The temperature of the laminating press rollers of the dry compound machine is 50°C to 60°C. The temperature of the curing chamber is 50°C to 55°C.

### [Manufacturing of wireless information integrated flake roll]

Based on the steps below, a wireless information integrated flake roll according to a preferred example of the disclosure is manufactured. The wireless information integrated flake roll here may be applied as an embodiment in the aforementioned electromagnetic induction heating layer roll to a process of manufacturing the aforementioned half-moon tab type closure liner roll.

First, a laminating surface of a base film roll is coated with a laminating adhesive (a first binding layer), and laminated with a laminating surface of a metal foil roll to obtain a wireless information integrated flake blank roll. Second, a metal foil of the wireless information integrated flake blank roll is etched, an antenna is electrically bonded with a chip, and a chip package protective adhesive is used to package the chip and a connecting wire for connecting the chip with the antenna by using a dispenser. In this case, the metal foil of the wireless information integrated flake blank roll forms an information and heating layer, and the wireless information integrated flake blank roll forms a wireless information integrated flake roll.

A peeling strength between the two layers laminated by the laminating adhesive is greater than 4 N/15 mm.

Besides, to add a battery to the information and heating layer, a fusion welding machine or a conductive adhesive may be used to electrically bond the battery with the chip.

On the other hand, based on the aforementioned wireless information integrated flake roll, a laminating surface of a protective layer roll is coated with a dry compound adhesive (a second binding layer), and dry-laminated with a surface (the surface away from the base film) of the information and heating layer of the wireless information integrated flake roll, and after more than 24 hours of curing in the curing chamber, the wireless information integrated flake roll related to another example can be obtained.

It should be noted that the above description is merely a schematic illustration of an example of manufacturing the half-moon tab type closure liner. That is, those of ordinary skill in the art to which this application belongs may also adjust the sequence of the steps to manufacture the half-moon tab type closure liner.

## Claims

1. A half-moon tab type closure liner (50), sequentially comprising, from top to bottom:
an upper layer (100), comprising a surface film (110);
a bonding layer (200), comprising a bonding adhesive (210A) or a bonding agent (220A) and a half moon tab layer (230); and
a sealing laminated layer (300), sequentially comprising an electromagnetic induction heating layer (310) and a sealing layer (320) from top to bottom,
wherein the bonding layer (200) laminates the upper layer (100) with the sealing laminated layer (300) through the bonding adhesive (210A) or the bonding agent (220A), and an unbonded area is formed between the upper layer (100) and the sealing laminated layer (300),
wherein the half moon tab layer (230) is disposed in the unbonded area, and the half moon tab layer (230) is laminated to one of the upper layer (100) and the sealing laminated layer (300) through a laminating adhesive (210B) or a laminating agent (220B), and
wherein the electromagnetic induction heating layer (310) is a wireless information integrated flake (100w; 100w'), comprising:
a base film (1w); an information and heating layer (3w), comprising an information area (31w) and an electromagnetic induction heating ring (32w); and a first binding layer (2w), located between the base film (1w) and the information and heating layer (3w),
wherein the information area (31w) is provided with an antenna (312w) and a chip (311w) connected with each other, and the electromagnetic induction heating ring (32w) surrounds the information area (31w) in a plane view angle, and
wherein a spacing is formed between the electromagnetic induction heating ring (32w) and the information area (31w).

2. The half-moon tab type closure liner (50) according to claim 1, wherein the upper layer (100) is laminated with the sealing laminated layer (300) through the bonding adhesive (210A), the half moon tab layer (230) is laminated with the upper layer (100) through the laminating adhesive (210B), a void area (SA) is formed between the half moon tab layer (230) and the sealing laminated layer (300), and the half moon tab layer (230) comprises:
a one-piece half moon tab film (234), made of at least one selected from the group consisting of paper, polyethylene terephthalate (PET), polypropylene (PP), polyamide (PA), polyethylene naphthalate (PEN) and polyimide (PI).

3. The half-moon tab type closure liner (50) according to claim 1, wherein the upper layer (100) is laminated with the sealing laminated layer (300) through the bonding agent (220A), the half moon tab layer (230) is laminated with the upper layer (100) through the laminating agent (220B), the half moon tab layer (230) is laminated with the sealing laminated layer (300) through a binder (240), and the half moon tab layer (230) comprises:
an opposite-fold half moon tab film (231), comprising an up-fold half moon tab film (231A) and a down-fold half moon tab film (231B), the up-fold half moon tab film (231A) being laminated with the upper layer (100), the down-fold half moon tab film (231B) being laminated with the sealing laminated layer (300), and a void area (SA) being formed between the up-fold half moon tab film (231A) and the down-fold half moon tab film (231B),
wherein the up-fold half moon tab film (231A) and the down-fold half moon tab film (231B) are respectively made of at least one selected from the group consisting of PA, PP, PET, PEN and PI, and
wherein a sectional width (W3) of the up-fold half moon tab film (231A) is less than or equal to a sectional width (W4) of the down-fold half moon tab film (231B).

4. The half-moon tab type closure liner (50) according to claim 1, wherein the upper layer (100) is laminated with the sealing laminated layer (300) through the bonding adhesive (210A), the half moon tab layer (230) is laminated with the upper layer (100) through the laminating adhesive (210B), a void area (SA) is formed between the half moon tab layer (230) and the sealing laminated layer (300), and the half moon tab layer (230) comprises:
a spliced half moon tab film (232), comprising a first half moon tab film (232A) and a second half moon tab film (232B), a gap area (GA) being formed between the first half moon tab film (232A) and the second half moon tab film (232B),
wherein the first half moon tab film (232A) is made of at least one selected from the group consisting of PP, PET, PA, PEN and PI, and the second half moon tab film (232B) is made of at least one selected from the group consisting of paper, PP, PET, PA, PEN and PI.

5. The half-moon tab type closure liner (50) according to claim 1, wherein the upper layer (100) is laminated with the sealing laminated layer (300) through the bonding agent (220A), the half moon tab layer (230) is laminated with the upper layer (100) through the laminating agent (220B), the half moon tab layer (230) is laminated with the sealing laminated layer (300) through a binder (240), and the half moon tab layer (230) comprises:
an opposite-fold spliced half moon tab film (233), comprising an up-fold half moon tab film (233A) and a down-fold half moon tab film (233B), the up-fold half moon tab film (233A) being laminated with the upper layer (100), the down-fold half moon tab film (233B) being laminated with the sealing laminated layer (300), and a void area (SA) being formed between the up-fold half moon tab film (233A) and the down-fold half moon tab film (233B),
wherein the up-fold half moon tab film (233A) comprises a first half moon tab film (232A) and a second half moon tab film (232B), and a gap area (GA) is formed between the first half moon tab film (232A) and the second half moon tab film (232B),
wherein the first half moon tab film (232A) of the up-fold half moon tab film (233A) and the down-fold half moon tab film (233B) are respectively made of at least one selected from the group consisting of PA, PP, PET, PEN and PI, and
wherein the second half moon tab film (232B) of the up-fold half moon tab film (233A) is made of at least one selected from the group consisting of paper, PA, PP, PET, PEN and PI.

6. The half-moon tab type closure liner (50) according to claim 1, wherein the sealing laminated layer (300) further comprises:
a bonding film (330), disposed at an uppermost layer of the sealing laminated layer (300),
wherein the bonding film (330) is made of at least one selected from the group consisting of polyethylene (PE), PP, PA, expandaple polyproplene (EPP) and expandaple polyethylene (EPE).

7. The half-moon tab type closure liner (50) according to claim 1, wherein the sealing laminated layer (300) further comprises:
a laminating film (370), disposed above the electromagnetic induction heating layer (310),
wherein the laminating film (370) is made of at least one selected from the group consisting of PP, PET, PEN, PE and PA.

8. The half-moon tab type closure liner (50) according to claim 1, wherein through the bonding adhesive (210A), a peeling strength between the upper layer (100) and the sealing laminated layer (300) is greater than or equal to 17.8 N/15 mm.

9. The half-moon tab type closure liner (50) according to claim 1, wherein the surface film (110) is made of at least one selected from the group consisting of PEN, PI, PET, PE, PP and PA.

10. The half-moon tab type closure liner (50) according to claim 1, wherein the sealing layer (320) is a hot melt glue or a combination of a sealing film (321) and a binding agent (322), the hot melt glue is made of at least one selected from the group consisting of ethylene vinyl acetate copolymer (EVA), polyisobutylene (PIB), ethylene butyl acrylate copolymer (EBA), ethylene acrylic acid copolymer (EAA), ethylene-methyl acrylate copolymer (EMAC), polyacrylate, polyacetate and ethylene methacrylic acid copolymer (EMAA), the sealing film (321) is made of at least one selected from the group consisting of PE, PP, PA, polyvinylidene chloride (PVDC), ethylene vinyl alcohol copolymer (EVOH) and PET, and the binding agent (322) is located between the sealing film (321) and the electromagnetic induction heating layer (310).

11. The half-moon tab type closure liner (50) according to claim 1, wherein the bonding adhesive (210A), the laminating adhesive (210B), the bonding agent (220A) and the laminating agent (220B) are a dry compound adhesive or a hot melt lamination glue, and the hot melt lamination glue is made of at least one selected from the group consisting of PE, PP, EMAA, EAA, ethylene ethyl acrylate copolymer (EEA), EMAC and ethylene methyl methacrylate (EMMA).

12. The half-moon tab type closure liner (50) according to claim 1, wherein the wireless information integrated flake (100w') further comprises a protective layer (5w) and a second binding layer (4w), the protective layer (5w) is located on one side, away from the base film (1w), of the information and heating layer (3w), and the second binding layer (4w) is located between the information and heating layer (3w) and the protective layer (5w).

13. The half-moon tab type closure liner (50) according to claim 1, wherein the spacing is a space between an outermost edge of the information area (31w) and an innermost edge of the electromagnetic induction heating ring (32w) and is 0.1 mm to 3 mm.

14. The half-moon tab type closure liner (50) according to claim 1, wherein a spacing is fully filled between the electromagnetic induction heating ring (32w) and the information area (31w).

15. The half-moon tab type closure liner (50) according to claim 1, wherein the information and heating layer (3w) further comprises at least one physical connection bridge (33w), configured to connect the information area (31w) with the electromagnetic induction heating ring (32w).
